# EUROPÄISCHE PATENTSCHRIFT

(11) **EP 1 879 128 B1**
(45) Veröffentlichungstag und Bekanntmachung des Hinweises auf die Patenterteilung: **16.08.2017**
(21) Anmeldenummer: 07012848.3
(22) Anmeldetag: 29.06.2007
(51) Int. Cl.: G06F 21/14, G06F 21/72

(54) **Abgesicherter Programmcode**
Secure program code
Code de programme vérifié

(30) Priorität: 10.07.2006 DE 102006031790
(43) Veröffentlichungstag der Anmeldung: 16.01.2008
(73) Patentinhaber: Giesecke+Devrient Mobile Security GmbH, 81677 München (DE)
(72) Erfinder: Baldischweiler, Michael, 81825 München (DE)

(56) Entgegenhaltungen:
- US-A1- 2001 056 539
- US-A1- 2002 129 244
- US-A1- 2004 107 087
- US-A1- 2005 289 397

## Beschreibung

Die Erfindung betrifft ein Verfahren und eine Vorrichtung zum Absichern eines auf einer Computerplattform ausführbaren Programmcodes in einem Simulator der Computerplattform.

Bei der Entwicklung von Software, z.B. von Betriebssystemen oder Applikationen für Chipkarten, Smart Cards, Mobilfunkkarten, sicheren Multimediakarten und ähnlichen spezialisierten pörtablen Datenträgern, wird die Software in der Regel nicht direkt auf der betreffenden Zielcomputerplattform entwickelt und ausgetestet, sondern auf einem Simulator und/ oder Emulator, der die entsprechende Zielcomputerplattform bzw. den dort eingesetzten Prozessor/ Mikrocontroller in einer separaten Entwicklungsumgebung nachbildet. Dies ist insbesondere für die Debugging-Phase der Softwareentwicklung sinnvoll, in der der auszutestende Programmcode und seine Interaktion mit der Zielcomputerplattform schrittweise nachvollzogen und auf ein korrektes Verhalten überprüft werden kann, denn das Debugging in einem Simulator ermöglicht die schnelle und einfache Fehlersuche ohne den zu testenden Programmcode auf der Zielplattform, möglicherweise fest verdrahtet, installieren zu müssen.

Bei der verteilten Softwareentwicklung für kommerzielle Computerplattformen stellt sich somit das Problem, dass ein für die Zielplattform entwickelter Programmcode, z. B. das Betriebssystem einer Chipkarte, zwar von Drittanbietern, die z.B. ergänzende Applikationen entwickeln, in einem Simulator mit Debugger ausführbar sein muss, der eigentliche Programmcode bzw. seine Algorithmik jedoch vor Nachahmung und Übernahme durch den Drittanbieter geschützt sein muss.
der Software vorhanden sein muss. Auf der Zielplattform wird die auszuführende Software teilweise in verschlüsselter Form bereitgestellt, wobei der Dongle die verschlüsselten Teile entschlüsselt.

US 2004/ 0107087 A1 beschreibt das verschlüsselte Speichern einer Hardwareschaltungsinformation für einen Hardware-Simulator.

US 2005/289397 A1 zeigt einen Computer mit einem Prozessor, einer Entschlüsselungseinheit und einer Zugriffssteuerung. Die Entschlüsselungseinheit entschlüsselt Programmcode, der verschlüsselt vorliegt, für eine Ausführung des Programmcodes durch den Prozessor. Die Zugriffssteuerung steuert den Zugriff auf den entschlüsselten Programmcode durch einen externen Debugger.

Bei der verteilten Softwareentwicklung für kommerzielle Computerplattformen stellt sich somit das Problem, dass ein für die Zielplattform entwickelter Programmcode, z. B. das Betriebssystem einer Chipkarte, zwar von Drittanbietern, die z.B. ergänzende Applikationen entwickeln, in einem Simulator mit Debugger ausführbar sein muss, der eigentliche Programmcode bzw. seine Algorithmik jedoch vor Nachahmung und Übernahme durch den Drittanbieter geschützt sein muss.

Demzufolge ist es die Aufgabe der vorliegenden Erfindung, einen zur Weiterentwicklungen durch einen Drittanbieter bereitgestellten Programmcode vor Auslesen und Nachahmen durch den Drittanbieter zu schützen.

Diese Aufgabe wird erfindungsgemäß durch ein Verfahren und eine Vorrichtung zum Absichern eines Programmcodes in einem Simulator mit den Merkmalen der unabhängigen Ansprüche gelöst. Die abhängigen Ansprüche beschreiben vorteilhafte Ausgestaltungen und Weiterbildungen der Erfindung.

Zum Absichern eines auf einer Computerplattform ausführbaren Programmcodes, der in einem Simulator dieser Computerplattform weiterentwickelt oder zur Entwicklung von weiteren Applikationen benötigt wird, wird der abzusichernde Programmcode verschlüsselt hinterlegt und nur dann entschlüsselt, wenn er in dem Simulator ausgeführt wird. Bei einer Simulationsvorrichtung, die einen Simulator der Computerplattform zum Ausführen und einen Speicher zum Speichern des abzusichernden Programmcodes umfasst, wird der Programmcode erfindungsgemäß durch ein verschlüsseltes Hinterlegten in dem Speicher abgesichert, wobei eine Sicherheitseinrichtung der Simulationsvorrichtung den abgesicherten Programmcode jeweils nur dann temporär entschlüsselt, wenn er in dem Simulator ausgeführt wird.

Auf diese Weise kann der abgesicherte Programmcode zwar in dem Simulator ausgeführt werden, es ist jedoch aufgrund der Verschlüsselung nicht möglich, die genaue Funktionsweise des Programmcodes bzw. den durch ihn implementierten Algorithmus analytisch nachzuvollziehen, da dies nur bei einem unverschlüsselt vorliegenden Programmcode möglich ist. Der abgesicherte Programmcode kann zwar zur Entwicklung von Applikationen, die mit dem Programmcode interagieren, dessen Routinen aufrufen, ausgeführt werden, die Möglichkeit des Auslesens des Programmcodes oder des Rekonstruierens des ihm zugrundeliegenden Algorithmus besteht jedoch nicht. Ein erfindungsgemäß abgesicherter Programmcode kann deshalb an einen Drittanbieter zum Entwickeln und Austesten von ergänzenden Applikationen in Interaktion mit dem abgesicherten Programmcode gefahrlos herausgegeben werden. Insbesondere kann ein Drittanbieter ein abgesichertes Betriebssystem in einem Simulator der Zielcomputerplattform im Rahmen von Eigenentwicklungen debuggen, ohne dass algorithmische oder implementatorische Details des Betriebssystems bekannt werden.

Der durch Verschlüsselung abgesicherte Programmcode wird von der Sicherheitseinrichtung in einem hierfür vorgesehenen sicheren Speicherbereich des Speichers der Simulationsvorrichtung derart abgelegt, dass zunächst nur die Sicherheitseinrichtung auf diesen Speicherbereich zugreifen kann. Dazu kann der abgesicherte Programmcode direkt in bereits verschlüsselter Form in den sicheren Speicherbereich eingespielt werden. Ebenso kann die Sicherheitseinrichtung den abzusichernden Programmcode in unverschlüsselter Form aufnehmen und vor dem Einspielen in den sicheren Speicherbereich selbst verschlüsselt, z.B. mittels des asymmetrischen RSA-Algorithmus oder anderer geeigneter Verschlüsselungsverfahren.

Gleichzeitig kontrolliert die Sicherheitseinrichtung jeden Zugriff auf den sicheren Speicherbereich, um Manipulationen und unautorisierte Zugriffe auf den abgesicherten Programmcode zu erkennen und zu verhindern. Einen Zugriff auf den sicheren Speicherbereich durch den Simulator erkennt die Sicherheitseinrichtung beispielsweise dadurch, dass sie einen Programmzähler des Simulators auslesen kann, der die Speicheradresse des jeweils nächsten auszuführenden Befehls angibt, und dadurch eine in den sicheren Speicherbereich weisende Speicheradresse erkennt.

Ein auszuführender, abgesicherter Programmcode, z.B. eine Betriebssystemroutine der Zielcomputerplattform, wird vor seiner Ausführung durch die Sicherheitseinrichtung entweder vollständig entschlüsselt und befehlsweise abgearbeitet, oder es wird jeder auszuführende Befehl des Programmcodes einzeln entschlüsselt und anschließend ausgeführt bevor der nächste Befehl entschlüsselt wird. Die entschlüsselten Befehle des Programmcodes können dabei von dem Simulator ausgeführt werden, nachdem der entschlüsselte Programmcode bzw. der jeweils entschlüsselte Befehl von der Sicherheitseinrichtung an den Simulator weitergeleitet wurde. Alternativ ist es auch möglich, dass die Sicherheitseinrichtung den entschlüsselten Programmcode bzw. einen entschlüsselten Befehl unter Umgehung des Simulators direkt ausführt, also temporär die Kontrolle über die Programmabarbeitung von dem Simulator übernimmt. In diesem Fall muss die Sicherheitseinrichtung jedoch nach Abarbeitung aller Befehle des abgesicherten Programmcodes die Registerzustände des Simulators, insbesondere den Programmzähler, entsprechend aktualisieren, bevor dem Simulator die Programmausführung wieder übertragen werden kann. Die Sicherheitseinrichtung umfasst dann eine eigene Befehlsausführungseinheit für den z.B. als Hexadezimalcode vorliegenden Programmcode und/ oder verwendet beim Ausführen des abgesicherten Programmcodes einen separaten Speicherbereich, der von dem Simulator-Speicherbereich verschieden ist, welchen der Simulator bei der Ausführung von ungesichertem Programmcode verwendet.

Die Sicherheitseinrichtung wird vor dem Ausführen des abgesicherten Programmcodes die Inhalte des Simulator-Speicherbereiches in seinen separaten Speicherbereich kopieren. Die Sicherheitseinrichtung wird nach dem Ausführen des abgesicherten Programmcodes die Inhalte des separaten Speicherbereichs in den Simulator-Speicherbereich kopieren. Die Inhalte dieser Speicherbereiche stellen die simulierten Inhalte der Computerplattform, d.h. deren Arbeitsspeicher, Register und ähnliches dar.

Im Verlauf der Ausführung von Befehlen des abgesicherten Programmcodes kann der Programmzähler des Simulators nach jedem ausgeführten Befehl aktualisiert, d.h. auf die Speicheradresse des nächsten auszuführenden Befehls gesetzt werden, oder der Programmzähler kann erst dann weitergesetzt werden, wenn alle Befehle des abgesicherten Programmcodes abgearbeitet sind und der nächste auszuführende Befehl nicht im sicheren Speicherbereich liegt. In diesem Fall wird der Programmzähler auf diese Speicheradresse außerhalb des sicheren Speicherbereichs gesetzt, damit der Simulator diesen Befehl ausführen kann.

Falls der abgesicherte Programmcode in einem innerhalb der Simulationsumgebung aufrufbaren Debugger ausgeführt wird, verhindert die Sicherheitseinrichtung eine Ablaufverfolgung des Programmcodes im Debugging-Modus. Der Programmcode kann dann zwar in dem Debugger ausgeführt werden aber nicht schrittweise nachvollzogen werden, selbst wenn der Programmcode spezielle Debugging-Information umfassen sollte. Falls in der Simulationsvorrichtung ein von dem gesicherten Programmcode verschiedener ungesicherter Programmcode installiert ist, der den gesicherten Programmcode oder einzelne Routinen des gesicherten Programmcodes aufruft, wird die aufgerufene Routinen derart ausgeführt, dass ein Austesten der Funktionalität des ungesicherten Programmcodes und dessen Interaktion mit dem gesicherten Programmcode möglich ist, eine echte Verzweigung in den abgesicherten Programmcode zu dessen Ablaufverfolgung wird jedoch unterbunden. Zum Debugging einer Applikation werden zudem Speicheradressen in dem sicheren Speicherbereich angegeben, die auf eine offene Schnittstelle in dem gesicherten Programmcode verweisen, um eine ungesicherte Applikation mit entsprechenden Basisroutinen des abgesicherten Programmcodes koppeln zu können. Wird bei einer schrittweisen Ablaufverfolgung einer auszutestenden Applikation z.B. eine solche Basisroutine eines abgesicherten Betriebssystems aufgerufen, so wird diese in einem zusammenhängenden Zyklus abgearbeitet, so dass ein Verzweigen in den Programmcode nicht möglich ist.

Die Simulationsvorrichtung kann als Entwicklungscomputer ausgestaltet sein, auf dem ein Simulationsprogramm als Simulator einer bestimmten Zielcomputerplattform, z. B. einer Chipkarte oder dergleichen, sowie ein mit dem Simulationsprogramm interagierendes Sicherheitsprogramm als erfindungsgemäße Sicherheitseinrichtung implementiert ist. Hierbei ist z.B. ein Chipkarten-Betriebssystem, das auf dem Chipkarten-Simulator des Entwicklungscomputers ausgeführt wird, bei der Entwicklung von Applikationen oder Applets für dieses Betriebsystem durch einen Drittanbieter vor Auslesen und Nachvollziehen im Debugger geschützt, während die Applikation ohne Einschränkungen der Betriebssystemfunktionalität oder der Debugging-Möglichkeiten entwickelt und ausgetestet werden kann. Zudem ist es aufgrund der erfindungsgemäß erforderlichen Interaktionen zwischen dem Simulationsprogramm und dem Sicherheitsprogramm sowohl möglich, beide als separate, interagierende Softwarekomponenten auf dem Entwicklungscomputer zu implementieren, als auch das Sicherheitsprogramm als erfindungsgemäße Erweiterung des Simulationsprogramms zu implementieren, z. B. als Programmbibliothek bzw. DLL ("Dynamic Linked Library").

Da die Sicherheitseinrichtung sämtliche Zugriffe auf den sicheren Speicherbereich kontrolliert, erkennt sie z.B. auch die Anforderung eines Speicherauszugs ("Memory Dump") des sicheren Speicherbereichs. Ein Speicherauszug kann dann entweder insgesamt verweigert oder derart maskiert werden, dass ein Auslesen oder Nachvollziehen des gesicherten Programmcodes nicht möglich ist, z.B. durch Ausgabe von konstanten Werten.

Weitere Merkmale und Vorteile der Erfindung ergeben sich aus der folgenden Beschreibung verschiedener erfindungsgemäßer Ausführungsbeispiele und Ausführungsalternativen in Zusammenhang mit den begleitenden Zeichnungen. Darin zeigen:
- Fig. 1: eine erfindungsgemäß ausgestaltete Simulationsvorrichtung mit einer Sicherheitseinrichtung;
- Fig. 2: eine schematisierte Darstellung einer Simulationsvorrichtung mit einem Debugger;
- Fig. 3: eine Darstellung eines erfindungsgemäßen Verfahrens; und
- Fig. 4: einen Simulationscomputer nach dem Stand der Technik.

Bei der Softwareentwicklung für spezialisierte oder proprietäre Computerarchitekturen und deren Mikrocontroller, wie z. B. für Chipkarten, Smart Cards und anderen digitalen Datenträgern für spezifische Einsatzgebiete, werden häufig Simulatoren und/oder Emulatoren eingesetzt. Die Softwareentwicklung findet dann nicht auf der eigentlichen Zielcomputerplattform statt, für die sie entwickelt wird, sondern in einer Entwicklungsumgebung, die diese Computerplattform mit ihrem Mikrocontroller simuliert.

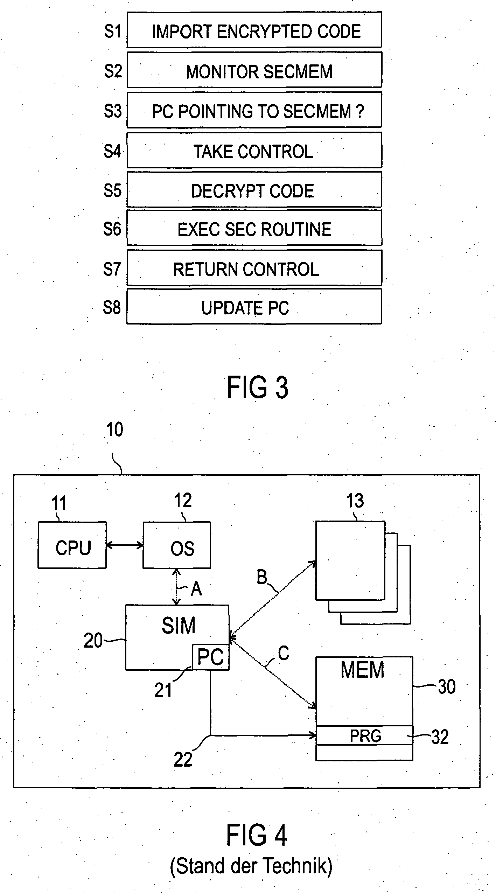

Eine solche Entwicklungsumgebung zeigt Fig. 4. Die Simulationsvorrichtung 10 ist als Entwicklungscomputer ausgestaltet, der in der Regel sämtliche Standardkomponenten einer üblichen Computerumgebung umfasst, insbesondere einen Prozessor 11 (CPU), eine adäquate Speicherhierarchie 30 (MEM), die zumindest aus einem Arbeitsspeicher und einem oder mehreren nachgeordneten Sekundärspeichern besteht, sowie diverse Peripheriegeräte 13, wie z. B. geeignete Kommunikationsschnittstellen mit UART-Bausteinen, spezialisierte Co-Prozessoren, z.B. für kryptographische Zwecke, und dergleichen. Die zentrale Steuerung dieser Komponenten übernimmt das Betriebssystem 12 (OS), neben dem zusätzlich ein Simulator 20 (SIM) installiert ist, der mit dem Betriebssystem 12 in Interaktion steht und die simulierte Entwicklungsumgebung der Zielcomputerplattform bereitstellt. Die Zielcomputerplattform wird von dem Simulationsprogramm 20 dabei so genau nachgebildet, dass ein Programmcode 32 eines in der Simulationsumgebung entwickelten Programms (PRG) mit identischem Verhalten auf der simulierten Computerplattform lauffähig ist. Der Simulator 20 bindet also auch die Hardwarekomponenten des Simulationscomputers 10 derart ein, dass die Hardwarekomponenten der simulierten Computerplattform nachgebildet werden. Aus diesem Grund kann eine Softwareentwicklung für die Zielplattform kostengünstig und flexibel innerhalb des Simulators 20 auf dem Entwicklungscomputer 10 stattfinden, ohne dass die Software auf der Zielplattform installiert werden muss.

Der Simulator 20 repräsentiert also ein auf dem Prozessor 11 unter Kontrolle des Betriebssystems 12 lauffähiges Simulationsprogramm, das mit dem Betriebssystem 12 in Interaktion steht (A) und die Speicher 30 und Peripheriegeräte 13 des Simulationscomputers 10 auf die gleiche Art und Weise wie die simulierte Zielplattform anspricht (B). In dem Speicher 30 ist dabei ein in dem Simulator 20 zu entwickelnder oder zu testender und auf der Zielplattform lauffähiger Programmcode 32 hinterlegt. Der Simulator 20 umfasst u. a. ein Programmzählerregister 21 (PC), in dem diejenige Speicheradresse des Speichers 30 verzeichnet ist, an der der nächste von dem Simulator 20 auszuführende Befehl des Programmcodes 32 liegt. Bei der Ausführung eines solchen Befehls lädt der Simulator 20 den Inhalt dieser Speicheradresse und führt ihn als Befehl aus. Anschließend wird der Programmzähler 21 auf die neue Speicheradresse des nächsten auszuführenden Befehls des Programmcodes 32 weitergesetzt.

Darüber hinaus umfasst ein Simulator 20 der Entwicklungsumgebung 10 meist einen Debugger, um schnell und einfach semantische Fehler in dem Programmcode 32 zu finden, dessen Performance zu bewerten, Schnittstellen zu anderen Programmcodes auszutesten und dergleichen.

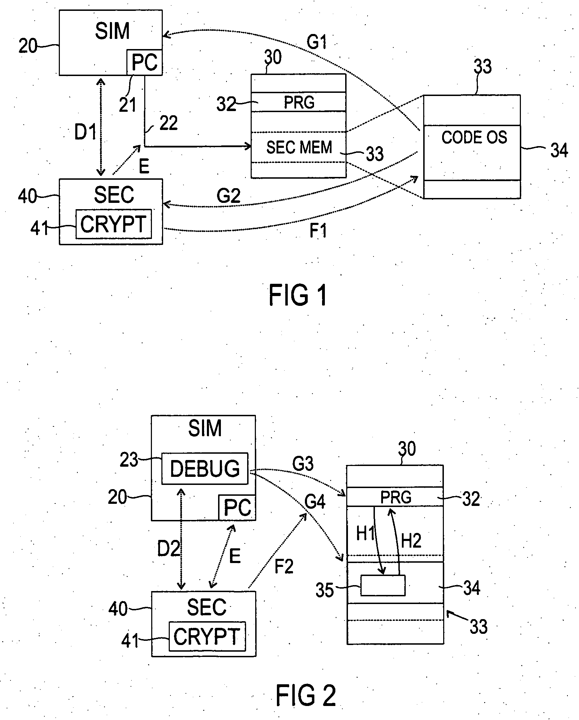

Ausgehend von der Anordnung der Fig. 4 zeigt Fig. 1 einen erfindungsgemäß eingerichteten Entwicklungscomputer 10, der zusätzlich über eine Sicherheitseinrichtung 40 verfügt, die einerseits in enger Interaktion mit dem Simulator 20 steht (D1) und andererseits einen sicheren Speicherbereich 33 in dem Speicher 30 kontrolliert (F1).

Um einen abzusichernden Programmcode 34, insbesondere das Betriebssystem der Zielcomputerplattform (CODE OS), gegenüber Auslesen und Nachvollziehen durch Nichtberechtigte abzusichern, wenn der Programmcode 34 in einem Simulator 20 bei einem Fremdanbieter vorliegt, wird der abzusichernde Programmcode 34 in einem sicheren Speicherbereich 33 (SEC MEM) des Speichers 30 von der Sicherheitseinrichtung 40 verschlüsselt hinterlegt. Dadurch ist der Programmcode 34 lediglich für die Sicherheitseinrichtung 40, die über eine entsprechende Kryptographiefunktionalität 41 verfügt, zugänglich und vor unberechtigtem Auslesen geschützt.

Neben dem verschlüsselten Programmcode 34 in dem sicheren Speicherbereich 33 sind in dem Speicher 30 zumeist auch ungesicherte Programmcodes 32 vorhanden, beispielsweise von Drittanbietern bereitgestellte weitere Applikationen. Falls der Simulator 20 über seinen Programmzähler 21 durch einen entsprechenden Zeiger 22 auf einen auszuführenden Befehl des abgesicherten Programmcodes 34 verweist, erkennt die Sicherheitseinrichtung 40 die in dem Programmzähler 21 des Simulators 20 vorhandene Speicheradresse des sicheren Speicherbereichs 33 (E). Zur Ausführung des an dieser Speicheradresse vorliegenden verschlüsselten Befehls muss er zunächst von der Sicherheitseinrichtung 40 mittels ihrer Kryptographiefunktion 41 entschlüsselt werden (F1), bevor er ausgeführt werden kann. Hierbei gibt es sowohl die Möglichkeit, dass der gesamte auszuführende verschlüsselte Programmcode 34 vor der Ausführung entschlüsselt wird, oder nur jeweils derjenige Befehl des Programmcodes 34, der unmittelbar auszuführen ist. Letzteres erhöht das Sicherheitsniveau, da niemals der gesamte abgesicherte Programmcode 34 vollständig entschlüsselt verfügbar ist.

Zur Ausführung eines entschlüsselten Befehls des Programmcodes 34 gibt es einerseits die Möglichkeit, dass der Befehl von der Sicherheitseinrichtung 40 an den Simulator 20 weitergeleitet und von diesem schließlich ausgeführt wird (G1). Andererseits ist auch möglich, dass die Sicherheitseinrichtung 40 selbst Befehle unmittelbar und unter Umgehung des Simulators 20 laden und ausführen kann (G2). In diesem Zusammenhang ist es zweckmäßig, dass bei der Ausführung eines verschlüsselten Programmcodes die Kontrolle über die Programmausführung vollständig von dem Simulator 20 auf die Sicherheitseinrichtung 40 übergeht, um den Kommunikationsaufwand während der Ausführung des abgesicherten Programmcodes 34 zu minimieren. Nach der Beendigung der Ausführung des verschlüsselten Programmcodes 34 wird die Kontrolle über den Programmablauf wieder von der Sicherheitseinrichtung 40 an den Simulator 20 zurückgegeben, indem der Programmzähler 21 und sämtliche anderen benötigten Register des Simulators 20 entsprechend aktualisiert werden.

Da die Sicherheitseinrichtung 40 und der Simulator 20 bei der vorliegenden Erfindung in enger Interaktion stehen (D1), kann es zweckmäßig sein, die Sicherheitseinrichtung 40 bzw. deren Funktionalität direkt in den Simulator 20 zu integrieren und nicht, wie in Fig. 2 dargestellt, als eigenständiges Sicherheitsprogramm 40 neben dem Simulationsprogramm 20 vorzusehen. Insofern ist es auch möglich, die Funktionalität der Sicherheitseinrichtung 40 als Programmbibliothek, z. B. als dynamisch aufzurufende DLL ("Dynamic Linked Library") zu implementieren, auf deren Funktionen der Simulator 20 im Bedarfsfalle zurückgreift. Insofern kann eine derartige Sicherheitsbibliothek 40 zusätzliche Funktionalitäten in den Simulator 20 einbringen, die es ermöglichen, einen abzusichernden Programmcode 34 in verschlüsselter Form in den sicheren Speicherbereich 33 einzuspielen und diesen im Bedarfsfalle zu entschlüsseln.

Fig. 2 zeigt eine Ausführungsform der vorliegenden Erfindung, bei der zum Zwecke der Fehlersuche und Weiterentwicklung eines ungeschützten Programmcodes 32 ein Debugger 23 in dem Simulator 20 ausgeführt werden kann, der wiederum unter Einfluss der Sicherheitseinrichtung 40 steht (D2). Bei der Ausführung des ungesicherten Programms 32 in dem Debugger 23 kann der Ablauf des Programmcodes 32 verfolgt werden, so dass jeweils einzelne Befehle schrittweise und nachvollziehbar für den Entwickler ausgeführt und auf ihre Korrektheit überprüft werden können (G3).

Besonders wenn ein Betriebssystem der simulierten Computerplattform als abgesicherter Programmcode 34 in dem sicheren Speicherbereich 33 liegt, kommt es häufig vor, dass ein ungesicherter Programmcode 32 eine Routine 35. des abgesicherten Betriebssystems 34 in dem Debugger 23 aufruft (H1), so dass der Debugger 23 zunächst versucht, eine Ablaufverfolgung der Betriebssystemroutine 35 vorzunehmen (G4). Ein solcher Zugriff des Debuggers 23 auf den sicheren Speicherbereich 33 wird jedoch von der Sicherheitseinrichtung 40 über die Überwachung des Programmzählers 21 erkannt (E) und in der Weise unterbunden (F2), dass zwar die Routine 35 ausgeführt wird und ihre Wirkung entfaltet, die Ablaufverfolgung des Programmcodes der Routine 35 in dem Debugger 23 jedoch nicht gestattet wird. Auf diese Weise kann ein Entwickler des ungesicherten Programmcodes 32 diesen zwar mit Hilfe des Debuggers 23 auch in seiner Interaktion mit gesicherten Betriebssystemroutinen 35 austesten, eine Ablaufverfolgung, die einen Rückschluss auf den Programmcodes des gesicherten Betriebssystems 34 und seiner Routinen 35 zulässt, ist jedoch nicht möglich. In diesem Zusammenhang werden auch Schnittstellenadressen des gesicherten Betriebssystems 34 angegeben, um die ungesicherten Applikationsfunktionen 32 mit den Basisfunktionen und -routinen 35 des gesicherten Betriebssystems 34 koppeln zu können. Wird bei der schrittweise Ablaufverfolgung die Applikation 32 durchlaufen und eine Basisroutine 35 des Betriebssystems 34 aufgerufen (H1), so wird diese in einem zusammenhängenden Zyklus abgearbeitet, so dass ein Verzweigen in den Programmcode der Betriebssystemroutine 35 nicht möglich ist. Nach dem Rücksprung (H2) im Anschluss an die Ausführung der Routine 35 ist ein normales Debugging der ungesicherten Applikation 32 wieder möglich.

Neben den geschilderten Zugriffen auf den sicheren Speicherbereich 33 erkennt die Sicherheitseinrichtung 40 außerdem auch die Anforderung eines Speicherauszugs ("Dump") des sicheren Speicherbereichs 33 und übernimmt diese Anfrage von dem Simulator 20. Ein herkömmlicher Speicherauszug des sicheren Speicherbereichs 33 wird von der Sicherheitseinrichtung 40 nicht erstellt, stattdessen wird lediglich ein maskierter Speicherauszug bereitgestellt, dem der gesicherte Programmcode 34 nicht zu entnehmen ist. Beispielsweise kann ein solcher Speicherauszug mit ausschließlich konstanten Werten erzeugt werden, z.B. Nullwerten 0x00.

Fig. 3 zeigt schließlich beispielhaft eine Ausgestaltung des erfindungsgemäßen Verfahrens. In Schritt S1 spielt die Sicherheitseinrichtung 40 den verschlüsselten abgesicherten Programmcode 34, beispielsweise das Betriebssystem der zu simulierenden Computerplattform, in den sicheren Speicherbereich 33 ein (IMPORT ENCRYPTED CODE). Alternativ ist es möglich, dass die Sicherheitseinrichtung 40 den abzusichernden Programmcode unverschlüsselt erhält, ihn mittels ihrer Kryptographiefunktion 41 verschlüsselt, beispielsweise durch herkömmliche Verschlüsselungsverfahren wie z.B. RSA, und im sicheren Speicherbereich 33 ablegt.

Anschließend wird in Schritt S2 die Überwachung sämtlicher Zugriffe auf den sicheren Speicherbereich 33 aufgenommen (MONITOR SECMEM), insbesondere durch den Simulator 20, einen Debugger 23 oder eine Betriebssystemroutinen 35 aufrufende ungesicherte Applikation 32. Ein solcher Zugriff auf den sicheren Speicherbereich 33 wird beispielsweise in Schritt S3 durch eine im Programmzähler 21 des Simulators 20 hinterlegte Speicheradresse des sicheren Speicherbereichs 33 erkannt (PC POINTING TO SECMEM). Anschließend übernimmt in Schritt S4 die Sicherheitseinrichtung 40 die Kontrolle über den weiteren Programmablauf von dem Simulator 20 und aktualisiert auch jeweils den Programmzähler 21 des Simulators 20 (TAKE CONTROL). Dies kann beispielsweise in der Weise geschehen, dass bei jedem Befehl eines ausgeführten abgesicherten Programmcodes 34 die entsprechende Speicheradresse im sicheren Speicherbereich 33 im Programmzähler 21 aktualisiert wird.

Nach der Entschlüsselung entweder der vollständigen aufgerufenen Betriebsystemroutine 35 oder eines Befehls dieser Routine 35 in Schritt S5 (DECRYPT CODE) wird die entschlüsselte Betriebssystemroutine 35 in Schritt S6 ausgeführt (EXEC, SEC ROUTINE). Anschließend gibt die Sicherheitseinrichtung 40 in Schritt S7 die Kontrolle über die Programmausführung wieder an den Simulator 20 zurück (RETURN CONTROL), indem sämtliche Register des Simulators 20 aktualisiert werden, so dass der Simulator 20 den in dem Programmzähler 21 verzeichneten nächsten ungesicherten Befehl ausführen kann.

Alternativ zu dem schrittweisen Aktualisieren des Programmzählers 21 durch die Sicherheitseinrichtung 40 ist es auch möglich, dass der Programmzähler 21 nicht aktualisiert wird, solange die Sicherheitseinrichtung 40 eine abgesicherte Betriebssystemroutine 35 ausführt, sondern erst von der Sicherheitseinrichtung 40 weitergesetzt wird, wenn der nächste auszuführende Befehl nicht im sicheren Speicherbereich 34 liegt, d.h. wenn die Kontrolle über die Programmausführung an den Simulator 20 zurückfällt (Schritt S8). Der Programmzähler 21 wird also erst dann weitergesetzt (UPDATE PC), wenn alle Befehle im sicheren Speicherbereich abgearbeitet sind und der Programmzähler 21 auf eine Stelle im Speicherbereich zeigt, die keinen verschlüsselten Befehl enthält.

## Patentansprüche

1. Verfahren zum Absichern eines auf einer Computerplattform ausführbaren Programmcodes (34) in einem Simulator (20) der Computerplattform, wobei der abzusichernde Programmcode (34) in dem Simulator (20) verschlüsselt vorliegt und nur beim Ausführen des verschlüsselten Programmcodes (34) entschlüsselt wird (S5),
**dadurch gekennzeichnet, dass** beim Ausführen (S6) des ausführbare Befehle umfassenden, verschlüsselten Programmcodes (34) alle Befehle oder lediglich der jeweils auszuführende Befehl des verschlüsselten Programmcodes (34) von einer Sicherheitseinrichtung (40) entschlüsselt werden/wird (S5), und
wobei die Sicherheitseinrichtung (40) ein auf einem Simulationscomputer (10) ausführbares Sicherheitsprogramm (40) ist und mit dem auf dem Simulationscomputer (10) als Programm implementierten Simulator (20) einer von dem Simulationscomputer (10) verschiedenen Computerplattform zusammenwirkt,
wobei die entschlüsselten Befehle des verschlüsselten Programmcodes (34) von der Sicherheitseinrichtung (40) ausgeführt werden (G2; S6) und die Sicherheitseinrichtung (40) für das Ausführen des abgesicherten Programmcodes einen separaten Speicherbereich verwendet, der von dem Simulator-Speicherbereich verschieden ist, welchen der Simulator (20) bei der Ausführung von ungesichertem Programmcode verwendet,
wobei der separate Speicherbereich ein sicherer Speicherbereich ist, auf den nur die Sicherheitseinrichtung (40) zugreifen kann,
wobei die Sicherheitseinrichtung (40) nach dem Ausführen der entschlüsselten Befehle die Befehle in einen nicht sicheren Bereich kopiert,
wobei der Simulator (20) nur die entschlüsselten Befehle ausführt, die sich in dem nicht sicheren Speicherbereich befinden.

2. Verfahren nach Anspruch 1, **dadurch gekennzeichnet, dass** der abzusichernde Programmcode (34) verschlüsselt in einen hierfür vorgesehenen sicheren Speicherbereich eingespielt wird (S1), auf den der Simulator (20) keinen unmittelbaren Zugriff hat.

3. Verfahren nach Anspruch 2, **dadurch gekennzeichnet, dass** Zugriffe auf den sicheren Speicherbereich (33) kontrolliert werden (F1; F2), wobei ein Zugriff auf den sicheren Speicherbereich (33) anhand einer in den sicheren Speicherbereich (33) verweisenden Speicheradresse in einem Programmzähler (21) des Simulators (20) erkannt wird (E).

4. Verfahren nach einem der Ansprüche 1 bis 3, **dadurch gekennzeichnet, dass** die Sicherheitseinrichtung (40) für das Ausführen des abgesicherten Programmcodes einen separaten Speicherbereich in den Simulator-Speicherbereich kopiert.

5. Verfahren nach einem der Ansprüche 1 bis 4, **dadurch gekennzeichnet, dass** ein Programmzähler (21) des Simulators (20) nur dann auf den nächsten auszuführenden Befehl weitergesetzt wird (S8), wenn der nächste auszuführende Befehl nicht in dem sicheren Speicherbereich (33) liegt.

6. Verfahren nach einem der Ansprüche 1 bis 5, **dadurch gekennzeichnet, dass** beim Ausführen (S6) des verschlüsselten Programmcodes (34) in einem in dem Simulator (20) ausführbaren Debugger (23) eine Ablaufverfolgung des verschlüsselten Programmcodes (34) verhindert wird.

7. Verfahren nach Anspruch 6, **dadurch gekennzeichnet, dass** beim Aufrufen einer Routine (35) des verschlüsselten Programmcodes (34) durch einen auf der Computerplattform ausführbaren ungesicherten Programmcode (32) in dem Debugger (23), die Routine (35) des verschlüsselten Programmcodes (34) ausgeführt wird (S6) und ein Verzweigen in den verschlüsselten Programmcode (34) der Routine (35) zur Ablaufverfolgung verhindert wird (F2).

8. Sicherheitseinrichtung (40) eingerichtet zur Realisierung eines Verfahrens nach einem der Ansprüche 1 bis 7.

9. Simulationsvorrichtung (10) zur Simulation eines auf einer von der Simulationsvorrichtung (10) verschiedenen Computerplattform ausführbaren abgesicherten Programmcodes (34), umfassend einen Simulator (20) der Computerplattform zum Ausführen des Programmcodes (34) und einen Speicher (30) zum Speichern zumindest des Programmcodes (34),
**dadurch gekennzeichnet, dass** der abgesicherte Programmcode (34) in dem Speicher (30) verschlüsselt vorliegt und durch eine Sicherheitseinrichtung (40), die eingerichtet ist, den abgesicherten Programmcode (34) bei Ausführung des Programmcodes (34) durch den Simulator (20) zu entschlüsseln, wobei der Simulator (20) ein auf der Simulationsvorrichtung (10) ausführbares Simulationsprogramm ist, die Sicherheitseinrichtung (40) ein auf der Simulationsvorrichtung ausführbares Programm oder eine Programmbibliothek ist, wobei vorzugsweise die Sicherheitseinrichtung (40) in den Simulator (20) integriert ist und
wobei die Sicherheitseinrichtung (40) eingerichtet ist, die entschlüsselten Befehle auszuführen und die Sicherheitseinrichtung (40) für das Ausführen des abgesicherten Programmcodes einen separaten Speicherbereich verwendet, der von dem Simulator-Speicherbereich verschieden ist, welchen der Simulator (20) bei der Ausführung von ungesichertem Programmcode verwendet, wobei der separate Speicherbereich ein sicherer Speicherbereich ist, der eingerichtet ist, dass darauf nur die Sicherheitseinrichtung (40) zugreifen kann, wobei die Sicherheitseinrichtung (40) eingerichtet ist, um nach dem Ausführen der entschlüsselten Befehle die Befehle in einen nicht sicheren Bereich zu kopieren,
wobei der Simulator (20) eingerichtet ist, nur die entschlüsselten Befehle auszuführen, die sich in dem nicht sicheren Speicherbereich befinden.

10. Vorrichtung nach Anspruch 9, **dadurch gekennzeichnet, dass** die Sicherheitseinrichtung (40) eingerichtet ist, ein Weitersetzen des Programmzählers (21) des Simulators (20) auf den nächsten auszuführenden Befehl nur dann zuzulassen, wenn der nächste auszuführende Befehl nicht in dem sicheren Speicherbereich (34) liegt.

11. Vorrichtung nach einem der Ansprüche 9 bis 10, **dadurch gekennzeichnet, dass** sie angepasst ist zur Ausführung eines Verfahrens nach einem der Ansprüche 1 bis 7.

12. Vorrichtung nach einem der Ansprüche 9 bis 11, **dadurch gekennzeichnet, dass** die von dem Simulator (20) simulierte Computerplattform eine Chipkarte, eine Smart Card eine Mobilfunkkarte oder eine sichere Multimediakarte ist.

## Claims

1. A method for securing a program code (34) executable on a computer platform in a simulator (20) of the computer platform, wherein the program code (34) to be secured is present in encrypted form in the simulator (20) and is decrypted (S5) only upon executing the encrypted program code (34),
**characterized in that** upon executing (S6) the encrypted program code (34) including executable commands, all commands or merely the respective command to be executed of the encrypted program code (34) is/are decrypted (S5) by a security device (40), and wherein the security device (40) is a security program (40) executable on a simulation computer (10) and cooperates with the simulator (20) of a computer platform different from the simulation computer (10) implemented on the simulation computer (10) as a program,
wherein the decrypted commands of the encrypted program code (34) are executed (G2; S6) by the security device (40) and the security device (40) uses for executing the secure program code a separate memory area that is different from the simulator memory area that is used by the simulator (20) when executing insecure code,
wherein the separate memory area is a secure memory area which can be accessed exclusively by the security device (40),
wherein the security device (40) after executing the decrypted commands copies the commands to a non-secure area,
wherein the simulator (20) executes only those decrypted commands which are disposed in the non-secure memory area.

2. The method according to claim 1, **characterized in that** the program code (34) to be secured is loaded (S1) in encrypted form to a secure memory area provided for this purpose, to which memory area the simulator (20) does not have immediate access.

3. The method according to claim 2, **characterized in that** accesses to the secure memory area (33) are controlled (F1; F2), wherein an access to the secure memory area (33) by means of a memory address referencing the secure memory area (33) is detected (E) in a program counter (21) of the simulator (20).

4. The method according to any of the claims 1 to 3, **characterized in that** the security device (40) copies a separate memory area into the simulator memory area for executing the secure program code.

5. The method according to any of the claims 1 to 4, **characterized in that** a program counter (21) of the simulator (20) is incremented (S8) to the next command to be executed exclusively when the next command to be executed is not disposed in the secure memory area (33).

6. The method according to any of the claims 1 to 5, **characterized in that** upon executing (S6) the encrypted program code (34) a trace of the encrypted program code (34) is prevented in a debugger (23) executable in the simulator (20).

7. The method according to claim 6, **characterized in that** when calling in the debugger (23) a routine (35) of the encrypted program code (34) by an insecure program code (32) executable on the computer platform, the routine (35) of the encrypted program code (34) is executed (S6) and a branching to the encrypted program code (34) of the routine (35) for tracing is prevented (F2).

8. A security device (40) configured to realize a method according to any of the claims 1 to 7.

9. A simulation device (10) for simulating a secure program code (34) executable on a computer platform different from the simulation device (10), comprising a simulator (20) of the computer platform for executing the program code (34) and a memory (30) for storing at least the program code (34),
**characterized in that** the secure program code (34) is present in the memory (30) in encrypted form and by a security device (40) which is configured to decrypt the secure program code (34) upon execution of the program code (34) by the simulator (20), wherein the simulator (20) is a simulation program executable on the simulation device (10), the security device (40) is a program executable on the simulation device or a program library, wherein preferably the security device (40) is integrated in the simulator (20) and wherein the security device (40) is configured to execute the decrypted commands and, for executing the secure program code, the security device (40) uses a separate memory area that is different from the simulator memory area that is used by the simulator (20) when executing insecure program code,
wherein the separate memory area is a secure memory area which is configured such that it can be accessed exclusively by the security device (40), wherein the security device (40) after execution of the decrypted commands is configured to copy the commands to a non-secure area,
wherein the simulator (20) configured to execute only those decrypted commands which are disposed in the non-secure memory area.

10. The device according to claim 9, **characterized in that** the security device (40) is configured to permit an incrementation of the program counter (21) of the simulator (20) to the next command to be executed only when the next command to be executed is not disposed in the secure memory area (34).

11. The device according to any of the claims 9 to 10, **characterized in that** it is adapted to execute a method according to any of the claims 1 to 7.

12. The device according to any of the claims 9 to 11, **characterized in that** the computer platform simulated by the simulator (20) is a chip card, a smart card, a mobile communication card or a secure multimedia card.

## Revendications

1. Procédé de sécurisation d'un code de programme (34) exécutable sur une plateforme informatique, dans un simulateur (20) de la plateforme informatique, cependant que le code de programme (34) à sécuriser se trouve dans le simulateur (20) sous forme cryptée et n'est décrypté (S5) que lors de l'exécution du code de programme (34) crypté,
**caractérisé en ce que**, lors de l'exécution (S6) du code de programme (34) crypté comprenant des instructions exécutables, toutes les instructions ou seulement l'instruction respectivement à exécuter du code de programme (34) crypté est/sont décryptée(s) (S5) par un dispositif de sécurité (40),
et
cependant que le dispositif de sécurité (40) est un programme de sécurité (40) exécutable sur un ordinateur de simulation (10) et co-agit avec le simulateur (20), mis en oeuvre en tant que programme sur l'ordinateur de simulation (10), d'une plateforme informatique différente de l'ordinateur de simulation (10),
cependant que les instructions décryptées du code de programme (34) crypté sont exécutées (G2; S6) par le dispositif de sécurité (40), et que le dispositif de sécurité (40) utilise, pour l'exécution du code de programme sécurisé, une zone mémoire distincte qui est différente de la zone mémoire du simulateur qu'utilise le simulateur (20) lors de l'exécution de code de programme non sécurisé, cependant que la zone mémoire distincte est une zone mémoire sûre à laquelle uniquement le dispositif de sécurité (40) peut accéder,
cependant que le dispositif de sécurité (40), après l'exécution des instructions décryptées, copie les instructions dans une zone non sûre,
cependant que le simulateur (20) exécute seulement les instructions décryptées qui se trouvent dans la zone mémoire non sûre.

2. Procédé selon la revendication 1, **caractérisé en ce que** le code de programme (34) à sécuriser est introduit (S1) sous forme cryptée dans une zone mémoire sûre prévue à cet effet et à laquelle le simulateur (20) n'a pas d'accès direct.

3. Procédé selon la revendication 2, **caractérisé en ce que** des accès à la zone mémoire sûre (33) sont contrôlés (F1; F2), cependant qu'un accès à la zone mémoire sûre (33) est reconnu (E) au moyen d'une adresse mémoire renvoyant à la zone mémoire sûre (33), dans un compteur de programme (21) du simulateur (20).

4. Procédé selon au moins une des revendications de 1 à 3, **caractérisé en ce que** le dispositif de sécurité (40) copie, pour l'exécution du code de programme sécurisé, une zone mémoire distincte dans la zone mémoire du simulateur.

5. Procédé selon au moins une des revendications de 1 à 4, **caractérisé en ce que** ce n'est que quand la prochaine instruction à exécuter ne se trouve pas dans la zone mémoire sûre (33) qu'un compteur de programme (21) du simulateur (20) n'est avancé (S8) sur la prochaine instruction à exécuter.

6. Procédé selon au moins une des revendications de 1 à 5, **caractérisé en ce que**, lors de l'exécution (S6) du code de programme (34) crypté dans un débuggeur (23) exécutable dans le simulateur (20), un retraçage du déroulement du code de programme (34) crypté est empêché.

7. Procédé selon la revendication 6, **caractérisé en ce que**, lors de l'appel d'une routine (35) du code de programme (34) crypté, par un code de programme (32) non sécurisé exécutable sur la plateforme informatique, dans le débuggeur (23), la routine (35) du code de programme (34) crypté est exécutée (S6), et une ramification/dérivation dans le code de programme (34) crypté de la routine (35) aux fins d'un retraçage du déroulement est empêchée (F2).

8. Dispositif de sécurité (40), conçu pour la réalisation d'un procédé selon une des revendications de 1 à 7.

9. Dispositif de simulation (10) destiné à la simulation d'un code de programme (34) sécurisé exécutable sur une plateforme informatique différente du dispositif de simulation (10), comprenant un simulateur (20) de la plateforme informatique destiné à l'exécution du code de programme (34), et une mémoire (30) destinée à la mémorisation d'au moins un code de programme (34),
**caractérisé en ce que** le code de programme (34) sécurisé se trouve sous forme cryptée dans la mémoire (30), et par un dispositif de sécurité (40) conçu pour, lors d'une l'exécution du code de programme (34) par le simulateur (20), décrypter le code de programme (34) sécurisé,
cependant que le simulateur (20) est un programme de simulation exécutable sur le dispositif de simulation (10), que le dispositif de sécurité (40) est un programme exécutable sur le dispositif de simulation ou une librairie, cependant que, de préférence, le dispositif de sécurité (40) est intégré dans le simulateur (20), et
cependant que le dispositif de sécurité (40) est conçu pour exécuter les instructions décryptées, et que le dispositif de sécurité (40), pour l'exécution du code de programme sécurisé, utilise une zone mémoire distincte qui est différente de la zone mémoire du simulateur qu'utilise le simulateur (20) lors de l'exécution de code de programme non sécurisé,
cependant que la zone mémoire distincte est une zone mémoire sûre conçue pour que seul le dispositif de sécurité (40) puisse y accéder, cependant que le dispositif de sécurité (40) est conçu pour, après l'exécution des instructions décryptées, copier les instructions dans une zone non sûre, cependant que le simulateur (20) est conçu pour n'exécuter que les instructions décryptées qui se trouvent dans la zone mémoire non sûre.

10. Dispositif selon la revendication 9, **caractérisé en ce que** le dispositif de sécurité (40) est conçu pour que ne soit que quand la prochaine instruction à exécuter ne se trouve pas dans la zone mémoire sûre (34) qu'un compteur de programme (21) du simulateur (20) n'est avancé sur la prochaine instruction à exécuter.

11. Dispositif selon une des revendications de 9 à 10, **caractérisé en ce qu'**il est conçu pour l'exécution d'un procédé selon une des revendications de 1 à 7.

12. Dispositif selon une des revendications de 9 à 11, **caractérisé en ce que** la plateforme informatique simulée par le simulateur (20) est une carte à puce, une smard card, une carte de téléphonie mobile ou une carte de multimédia sûre.
